# EUROPÄISCHE PATENTSCHRIFT

(11) **EP 0 667 378 B1**
(45) Veröffentlichungstag und Bekanntmachung des Hinweises auf die Patenterteilung: **25.08.1999**
(21) Anmeldenummer: 94119210.6
(22) Anmeldetag: 06.12.1994
(51) Int. Cl.: C09D 1/00

(54) **Bindemittel für lagerfähige Überzugsmassen**
Binders for storage stable coating compositions
Liants pour compositions de revêtement pourvant être stockées

(30) Priorität: 10.02.1994 DE 4404090
(43) Veröffentlichungstag der Anmeldung: 16.08.1995
(73) Patentinhaber: HÜLS AKTIENGESELLSCHAFT, 45764 Marl (DE)
(72) Erfinder: Edelmann, Roland, D-53859 Niederkassel (DE); Schnippering, Friedhelm, D-53721 Siegburg (DE); Fliedner, Christine, Dr., D-53127 Bonn (DE); Matthes, Reinhard, Dr., D-51427 Bergisch Gladbach (DE)

(56) Entgegenhaltungen:
- FR-A- 2 142 674
- DATABASE WPIL Nr. 86-289337; & JP-A-61 213 270 (KANSAI PAINT KK)

## Beschreibung

Die Erfindung betrifft Bindemittel für lagerfähige Überzugsmassen (Beschichtungsmassen) auf der Basis einer Mischung von Kieselsäureestern, Lösungsmitteln, Härtern und eines Antiabsetzmittels mit einem Flammpunkt der Mischung von deutlich mehr als 21°C.

Bindemittel für Feststoffteilchen auf der Basis von Hydrolysaten von Kieselsäureestern bzw. Kieselsäuregelen sind bekannt. Derartige Bindemittel werden in der Farbenindustrie eingesetzt. Durch Pigmentieren solcher Bindemittel, z.B. mit Zinkstaub, erhält man Anstrichfarben (Zinkstaubfarben) für die korrosionsbeständige Beschichtung von Metallen, insbesondere Eisen und Stahl. Die ausgehärteten Beschichtungen zeichnen sich durch eine hohe Oberflächenhärte und somit ausgezeichnete Abriebfestigkeit, gute Lösungsmittel- und Temperaturbeständigkeit sowie elektrische Leitfähigkeit aus.

Am Anfang der Entwicklungsreihe der Zinkstaubfarben auf Basis von Kieselsäuregelen standen die Zweikomponenten-Systeme: Die eine Komponente ist im einfachsten Fall ein Hydrolysat von Ethylsilikat in alkoholischer Lösung als Bindemittel, die andere der Zinkstaub. Beide Komponenten werden erst unmittelbar vor der Anwendung gemischt, da sich nach der Zumischung des Zinkstaubs die Beschichtungsmasse innerhalb weniger Stunden verfestigt (US-PS 3 056 684). Die folgenden Entwicklungen machten sich den Einfluß verschiedener Zusatzstoffe auf die Verarbeitbarkeit und Qualität der Anstriche zunutze, z.B. durch Zusätze von Polyvinylbutyral (US-PS 3 392 130), von Borsäureestern (US-PS 3 392 036), von Alkyltitanaten (US-PS 3 442 824, US-PS 3 546 155) oder von Trialkylphosphaten (DE-PS 2 000 199). Zur Erhöhung des Flammpunktes der Bindemittel wurde Ethylsilikat mit höheren Alkoholen umgeestert (US-PS 3 730 743). Zweikomponenten-Zinkstaubfarben besitzen jedoch bezüglich ihrer Anwendung einige Nachteile. Aufgrund der getrennten Lagerung von Bindemittel und Zinkstaub bestehen Nachteile hinsichtlich der Lagerhaltung. Einmal angesetzte Mischungen müssen innerhalb weniger Stunden sofort und vollständig aufgearbeitet. werden. Des weiteren verändern sich durch Alterung des Hydrolysats im Verlauf der Lagerung wichtige anwendungstechnische Parameter, wie Verarbeitungseigenschaften (z.B. Viskosität) und Reaktivität (Einfluß auf Aushärtungsgeschwindigkeit), so daß bei der Anwendung von Zinkstaubfarben unter Verwendung von Bindemitteln unterschiedlichen Alters erhebliche Schwierigkeiten entstehen können.

Aufgrund der genannten Nachteile wurden in der Folgezeit die sogenannten Einkomponenten-Systeme entwickelt. Diese sollten insbesondere die Stabilität der Mischung von Bindemittel, Pigmenten und Füllstoffen im Gebinde verbessern. Wegen der hohen Dichte von Zink und der niedrigen Viskosität des Alkylsilikats setzte sich der Zinkstaub bei der Lagerung in geschlossenen Gebinden derart am Boden ab, daß die gebildeten Niederschläge nicht mehr oder nur schwer aufrührbar waren. Durch die Verwendung spezieller rheologischer Additive, wie z.B. BENTONE oder pyrogene Kieselsäure, wurde die Herstellung von Einkomponenten-Zinkstaubfarben möglich, die auch nach mehreren Monaten ohne Schwierigkeiten einsetzbar sind. Es handelt sich um Formulierungen, die unhydrolysierte Kieselsäureester enthalten und erst unter Einwirkung von Luftfeuchtigkeit durch Hydrolyse und Kondensation zu einem zunehmend vernetzten SiO₂-Gel abreagieren (US-PS 3 859 101, DE-PS 26 54 036). Durch alkalisch reagierende Substanzen, zum Beispiel Amine oder Alkoholate, wird der Hydrolyse- und Kondensationsvorgang katalysiert.

Die bekannten Bindemittel weisen auf Grund der Verwendung von Alkoholen, Ketonen, Ethern und Alkylestern niederer Carbonsäuren als Lösungsmittel bzw. -gemische einen Flammpunkt auf, der oft weniger als 21°C beträgt. Da bei der Anwendung der Zinkstaubfarbe durch Hydrolyse geringe Mengen Alkohol frei werden, ist es schwierig, bei Bindemitteln auf der Basis von Ethylsilikat einen Flammpunkt zu erreichen, der größer als 21°C ist. Dies trifft auch zu, wenn Lösungsmittel oder Lösungsmittelgemische eingesetzt werden, die ursprünglich einen Flammpunkt von wesentlich mehr als 21°C aufweisen. Bei Verwendung von Xylol als Lösungsmittel liegt der Flammpunkt des Bindemittels bei 23°C (EP-PS 0 039 008). Bei Einsatz der Propyl- oder Butylsilikate entstehen ebenfalls Systeme mit höheren Flammpunkten. In beiden Fällen wird jedoch infolge der langsameren Verdunstung des Lösungsmittels (Xylol bzw. entstehende Alkohole) und wegen des veränderten Hydrolyseverhaltens der veresterten Kieselsäuregruppen die Anfangsaushärtung der Farben verzögert.

Es bestand daher das Problem, Bindemittel auf der Basis einer Mischung von Kieselsäureestern, Lösungsmitteln, Härtern und eines Antiabsetzmittels mit einem Flammpunkt der Mischung von mehr als 21°C zu finden, welche die erwähnten Nachteile nicht aufweisen.
Gemäß Patentanmeldung P 42 26 546.0 wurden durch einen Gehalt an n-Butylacetat Bindemittel erhalten, die einen Flammpunkt von wenig mehr als 21°C aufweisen.
Es hat sich nun gezeigt, daß durch den Einsatz eines Aliphatengemisches, welches im Handel als Exxsol D 30 erhältlich ist, ein Flammpunkt der Mischung von deutlich mehr als 21°C erhalten werden kann, der auch bei Lagerung über einen Zeitraum von mehr als 6 Monaten bei einer Temperatur von 50°C erhalten bleibt. Die erfindungsgemäßen Bindemittel zeichnen sich durch gute rheologische Eigenschaften aus. Das rheologisch wirksame Antiabsetzmittel ist in den gemäß der Erfindung eingesetzten Lösungsmitteln gut löslich. Das erfindungsgemäße Bindemittel bildet eine Komponente für die Herstellung von Beschichtungsmassen. Es liefert mit Zinkstaub bzw. Zinkstaubmischungen Beschichtungsmassen, die unter der Bezeichnung Zinkstaubfarben bekannt sind. Aber auch andere herkömmliche anorganische Pigmente oder Füllstoffe sind mit dem erfindungsgemäßen Bindemittel verträglich, wie z.B. Eisenoxid, Chromoxid, Titandioxid, Eisenglimmer, Bariumsulfat, Kaolin, Talkum, Glimmer oder Mullit. Sämtliche Anstrichfarben sind in geschlossenen Gebinden über einen längeren Zeitraum haltbar. Die während der Lagerung sich gegebenenfalls absetzenden Pigmente bzw. Pigmentmischungen sind leicht zu einer gleichmäßigen Suspension aufrührbar. Innerhalb des üblichen Verarbeitungszeitraumes setzen sich die Pigmente nicht ab, das heißt, ein zusätzliches Rühren ist nicht erforderlich. Die Farben lassen sich in herkömmlicher Weise, z.B. durch Spritzen oder Streichen, gut auftragen und ergeben schnell aushärtende (trocknende) Beschichtungen mit einem hervorragenden Korrosionsschutz. Die Härte der Beschichtungen entsprechend dem Erichsenstab beträgt nach 4 Stunden mehr als 150 und nach 6 Stunden 200 bis 250. Des weiteren sind die auf der Basis des erfindungsgemäßen Bindemittels hergestellten Anstrichfarben mit einer großen Reihe von Deckbeschichtungen auf Basis organischer Harze verträglich.

Die im erfindungsgemäßen Bindemittel eingesetzten Kieselsäureester sind monomere Kieselsäureester oder oligomere Kieselsäureester mit 2 bis 10 Si-Atomen. Die monomeren Kieselsäureester entsprechen der Summenformel Si(OR')₄, wobei R' Ethyl bedeutet.

Die Kieselsäureester liegen im erfindungsgemäßen Bindemittel in unhydrolysierter Form vor. Bevorzugte Kieselsäureester sind oligomere Ethylsilikate mit einem SiO₂-Gehalt von 18 bis 50 Gew.-%, vorzugsweise von 24 bis 40 Gew.-%.

Als Lösungsmittel für die erfindungsgemäßen Bindemittel werden vorzugsweise aliphatische und aromatische Kohlenwasserstoffe eingesetzt. Hierbei ist das Aliphatengemisch, welches im Handel als Exxsol D 30 erhältlich ist, in jedem Fall enthalten. Das Lösungsmittel kann ausschließlich Exxsol D 30 sein. Der Gehalt an Aliphatengemisch beträgt bevorzugt 6 bis 60 Gew.-%, bezogen auf das Gesamtgewicht des Bindemittels. Die genannten Lösungsmittel werden dem Kieselsäureester vorzugsweise als Lösungsmittelgemisch zugesetzt. Besonders bevorzugt wird ein Gemisch aus Exxsol D 30 und aromatischen Lösungsmitteln - wobei letztere im Handel unter dem Namen SOLVESSO 100 erhältlich sind - im Gewichtsverhältnis 1 : 6 bis 6 : 1. Dieses Gewichtsverhältnis beträgt in einer weiter bevorzugten Ausführungsform der Erfindung 1 : 3 bis 3 : 1. Der Lösungsmittelgehalt des erfindungsgemäßen Bindemittels beträgt vorzugsweise 40 bis 70 Gew.-%, bezogen auf das Gesamtgewicht des Bindemittels.

Als in den erfindungsgemäßen Bindemitteln rheologisch wirksame Antiabsetzmittel haben sich Styrolcopolymere erwiesen. Bevorzugt werden Styrol/Acrylat-Copolymere oder Polymerisate auf Basis von Methacrylsäureestern oder i-Butylmethacrylat eingesetzt. Diese besitzen eine gute Löslichkeit in den oben genannten Lösungsmitteln und sind mit den anderen Bestandteilen der Zinkstaubfarbe sehr gut verträglich. Das Antiabsetzmittel wird in Mengen von etwa 1 bis 20 Gew.-%, bezogen auf die Menge des verwendeten Kieselsäureesters, zugesetzt. Vorzugsweise werden ca. 8 bis 15 Gew.-% zugesetzt.

Um die Härtungsreaktion zu beschleunigen, können dem erfindungsgemäßen Bindemittel bekannte Katalysatoren zugesetzt werden. Als solche Härtungskatalysatoren eignen sich besonders Alkanolamine, wie z.B. Monoethanolamin, Triethanolamin, Propanolamine oder ein tertiäres Amin , wie z.B. das im Handel erhältliche ANCHOR K 54. Sie werden gegebenenfalls in Mengen von etwa 0,5 bis 25 Gew.-%, bezogen auf die Menge des verwendeten Kieselsäureesters, zugesetzt.
Die Erfindung wird nachstehend anhand der Beispiele erläutert.

### Beispiel 1:

Es werden

| | |
|---|---|
| 448 Gew.-Teile | Ethylsilikat (im Handel erhältlich als DYNASIL 40) |
| 467 Gew.-Teile | Aromatengemisch (im Handel erhältlich als SOLVESSO 100) |
| 180 Gew.-Teile | Aliphatengemisch (im Handel erhältlich als EXXSOL D 30) |
| 60 Gew. Teile | Styrolacrylat |
| 45 Gew.-Teile | tertiäres Amin (im Handel erhältlich als ANCHOR K 54) |

vermischt. In dieses Bindemittel werden 4800 Gew.-Teile Farbenzinkstaub eingeführt. Der Zinkstaub hat eine mittlere Teilchengröße von 6 bis 7 Mikron und enthält Beimengungen von Glimmer, Chromoxid und Talkum in einer Gesamtmenge von 5 Gew.-%.

Das Gemisch ist über einen Zeitraum von mehr als 6 Monaten auch bei einer Temperatur von 50 °C ohne Veränderung seiner Eigenschaften lagerfähig.

Eine Beschichtung mit dieser Mischung in einer Schichtdicke von 60 bis 70 Mikron ist bei einer relativen Luftfeuchte von 60 % und einer Temperatur von 20 °C in 20 - 30 Minuten staubtrocken und erreicht nach 4 Stunden eine Härte entsprechend dem Erichsenstab von 150, nach 6 Stunden hat die Beschichtung eine Härte entsprechend dem Erichsenstab von 200, nach 1 Tag von mehr als 500.

Der Flammpunkt des Bindemittels beträgt 30 °C nach DIN 53213.

### Beispiel 2 (Vergleichsbeispiel):

Es werden

| | |
|---|---|
| 448 Gew.-Teile | Ethylsilikat (im Handel erhältlich als DYNASIL 40) |
| 467 Gew.-Teile | n-Butylacetat |
| 180 Gew.-Teile | Aromatengemisch (im Handel erhältlich als SOLVESSO 100) |
| 60 Gew.-Teile | Styrolacrylat |
| 45 Gew.-Teile | Diisopropanolamin |

vermischt. In dieses Bindemittel werden 4800 Gew.-Teile Farbenzinkstaub gleicher Beschaffenheit und Zusammensetzung wie in Beispiel 1 eingeführt.

Das Gemisch ist über einen Zeitraum von mehr als 6 Monaten ohne Veränderung seiner Eigenschaften lagerfähig.

Eine Beschichtung mit dieser Mischung in einer Schichtdicke von 60 bis 70 Mikron ist bei einer relativen Luftfeuchtigkeit von 60% und einer Temperatur von 20°C in 6 bis 8 Minuten staubtrocken und erreicht nach 2 Stunden eine Härte entsprechend dem Erichsenstab von mehr als 150, nach 4 Stunden hat die Beschichtung eine Härte entsprechend dem Erichsenstab von 300, nach einem Tag von mehr als 500.

Der Flammpunkt des fertigen Bindemittels beträgt 23°C nach DIN 53213.

### Beispiel 3: (Vergleichsbeispiel)

Es werden

| | |
|---|---|
| 120 Gew.-Teile | Propylsilikat mit ca. 35 bis 40 Gew.-% SiO₂ |
| 107 Gew.-Teile | Aliphatengemisch (im Handel erhältlich als Exxsol D 30) |
| 46 Gew. Teile | Aromatengemisch (im Handel erhältlich als SOLVESSO 100) |
| 15 Gew.-Teile | Styrolacrylat |
| 12 Gew.-Teile | Diisopropanolamin |

vermischt. In dieses Bindemittel werden 1.200 Gew.-Teile Farbenzinkstaub gleicher Beschaffenheit und Zusammensetzung wie in Beispiel 1 eingeführt. Das Gemisch ist über einen Zeitraum von mehr als 6 Monaten ohne Veränderung seiner Eigenschaften lagerfähig.

Eine Beschichtung mit dieser Mischung in einer Schichtdicke von 60 bis 70 Mikron ist bei einer relativen Luftfeuchtigkeit von 60% und einer Temperatur von 20°C in 20 bis 30 Minuten staubtrocken und erreicht nach 4 Stunden eine Härte entsprechend dem Erichsenstab von 100 bis 150, nach 6 Stunden hat die Beschichtung eine Härte entsprechend dem Erichsenstab von 150, nach einem Tag von 400 bis 500.

Der Flammpunkt des fertigen Bindemittels beträgt 28°C nach DIN 53213.

### Beispiel 4 (Vergleichsbeispiel)

- 340 Gew.-Teile: Ethylsilikat (im Handel erhältlich als DYNASIL 40)
- 300 Gew.-Teile: Ethylenglykolmonoethylether
- 10 Gew.-Teile: polymeres Butyltitanat
- 230 Gew.-Teile: einer 25%igen Lösung eines Terpolymerisates aus Ethylacrylat, Ethyl- und Methylmethacrylat in Methylisobutylketon
- 45 Gew.-Teile: Triethanolamin
- 75 Gew.-Teile: BENTONE-Paste 34 = 10 Gew.-Teile BENTONE
10 Gew.-Teile eines elektroneutralen Netz-, Schwebe- und Dispergiermittels (im Handel als ANTI-TERRA-U erhältlich)
80 Gew.-Teile Benzin 100/140
werden vermischt. In dieses Bindemittel werden 4.000 Gew.-Teile Farbenzinkstaub eingeführt.
Der Zinkstaub hat eine mittlere Teilchengröße von 6 bis 7 Mikron und enthält Beimengungen von Glimmer, Chromoxid und Talkum in einer Gesamtmenge von 5 Gew.-%.

Das Gemisch ist über einen Zeitraum von mehr als 6 Monaten ohne Veränderung seiner Eigenschaften lagerfähig.

Eine Beschichtung mit dieser Mischung in einer Schichtdicke von 60 bis 70 Mikron ist bei einer relativen Luftfeuchtigkeit von 60% und einer Temperatur von 20°C in 10 Minuten staubtrocken und erreicht nach 90 Minuten eine Härte entsprechend einem Bleistift H. Nach 4 Stunden hat die Beschichtung eine Härte entsprechend dem Erichsenstab von 200, nach einem Tag von 300.

Der Flammpunkt des fertigen Binders beträgt 10°C nach DIN 53213.

## Patentansprüche

1. Bindemittel für Einkomponentensysteme auf der Basis einer Mischung von Kieselsäureestern, Lösungsmittel, Härtern und eines Antiabsetzmittels mit einem Flammpunkt der Mischung von > 21 bis 30 °C, mit
- monomerem Ethylsilikat oder oligomerer Ethylsilikate mit einem SiO₂-Gehalt von 18 bis 50 Gew.-% und
- einem Gehalt an Aliphatengemisch mit einem Siedebereich von 130 bis 166°C und einem durch schnittlichen Molgewicht von 133.

2. Bindemittel nach Anspruch 1, gekennzeichnet durch einen Gehalt an Aliphatengemisch von 6 bis 60 Gew.-%, bezogen auf das Gesamtgewicht des Bindemittels.

3. Bindemittel nach Anspruch 1 oder 2, dadurch gekennzeichnet, daß als Lösungsmittel ein Gemisch aus aliphatischen und aromatischen Lösungsmitteln im Gewichtsverhältnis 1 : 6 bis 6 : 1, vorzugsweise 1 : 3 bis 3 : 1, eingesetzt wird.

4. Bindemittel nach einem der Ansprüche 1 bis 3, gekennzeichnet durch einen Lösungsmittelgehalt von 40 bis 70 Gew.-%, bezogen auf das Gesamtgewicht des Bindemittels.

5. Verwendung von Bindemitteln nach einem der Ansprüche 1 bis 4 in zinkhaltigen Beschichtungsmassen.

## Claims

1. A binder for a one-component system based on a mixture of silicic esters, solvent, curing agents and an anti-settling agent, the mixture having a flash point of > 21 to 30°C, comprising
- monomeric ethyl silicate or oligomeric ethyl silicates having an SiO₂ content of from 18 to 50% by weight and
- an aliphatics mixture having a boiling range of from 130 to 166°C and an average molecular weight of 133.

2. A binder according to claim 1, characterized in that it contains from 6 to 60% by weight of an aliphatics mixture, based on the overall weight of the binder.

3. A binder according to claim 1 or 2, characterized in that a mixture of aliphatic and aromatic solvents in a weight ratio of from 1:6 to 6:1, preferably from 1:3 to 3:1, is employed as solvent.

4. A binder according to any one of claims 1 to 3, characterized by a solvent content of from 40 to 70% by weight, based on the overall weight of the binder.

5. The use of a binder according to any one of claims 1 to 4 in a coating composition comprising zinc.

## Revendications

1. Liants pour sytèmes à un composant à base d'un mélange d'esters de l'acide silicique, de solvants, de durcissants et d'un agent anti-sédimentation avec un point d'éclair du mélange allant de moins de 21 à 30°C, avec
• du silicate d'éthyle monomère ou
• des silicates d'éthyle oligomères ayant une teneur en SiO₂ de 18 à 50 % en poids et
• une teneur en mélange de composés aliphatiques
• présentant un intervalle d'ébullition de 130 à 166°C et un poids moléculaire moyen de 133.

2. Liants selon la revendication 1,
caractérisés en ce qu'
ils contiennent un mélange de composés aliphatiques à raison de 6 à 60 % en poids par rapport au poids total du liant.

3. Liants selon la revendication 1 ou 2,
caractérisés en ce qu'
on utilise comme solvant un mélange de solvants aliphatiques et aromatiques dans un rapport pondéral de 1:6 à 6:1, de préférence de 1:3 à 3:1.

4. Liants selon l'une des revendications 1 à 3,
caractérisés par
une teneur en solvant de 40 à 70% en poids par rapport au poids total du liant.

5. Utilisation de liants selon l'une des revendications 1 à 4 dans des produits d'enduction contenant du zinc.
